# EUROPEAN PATENT SPECIFICATION

(11) **EP 0 736 411 B1**
(45) Date of publication and mention of the grant of the patent: **18.07.2001**
(21) Application number: 96105488.9
(22) Date of filing: 04.04.1996
(51) Int. Cl.: B60N 2/36

(54) **A rear seat for a vehicle**
Rücksitz eines Fahrzeuges
Siège arrière d'un véhicule

(30) Priority: 07.04.1995 IT TO950272
(43) Date of publication of application: 09.10.1996
(73) Proprietor: FIAT AUTO S.p.A., 10135 Torino (IT)
(72) Inventor: Aragno, Franco, 10093 Collegno (IT); Di Giusto, Nevio, 10100 Torino (IT)
(74) Representative: Plebani, Rinaldo

(56) References cited:
- FR-A- 1 586 887
- FR-A- 2 154 247
- US-A- 4 106 809

## Description

The present invention relates to a rear seat for a vehicle, particularly a vehicle rear seat which can be folded in such a way as to enlarge the vehicle's baggage compartment to form a protected space (See, for example, FR-A-1 586 887, corresponding to the preamble of claim 1.)

Vehicle rear seats are known which essentially comprise a seat squab connected at the front to a floor of the vehicle by means of first hinges and at the rear by means of releasable, for example snap engageable, locking means, and a seat back the rear face of which defines the limit of a baggage compartment of the vehicle, connected to the vehicle itself by means of second hinges having an axis of rotation parallel to a lower edge of the seat back, and by means of a known releasable hooking device, disposed at an upper edge of the seat back itself.

A seat of this type makes it possible for both the seat and the seat back to be tipped forward in such a way as to obtain an enlargement of the baggage compartment when needed.

In fact, it is possible to release the rear locking means of the seat and to turn this latter upwardly about the first hinge from a first position in which this seat is disposed horizontally to a second position in which it is angularly inclined with respect to the horizontal, through a predetermined angle usually 90°. Similarly, after having released the upper hooking device the seat back can be tipped downwardly about the second hinge from a first backrest position, in which it is inclined with respect to the horizontal, through a predetermined angle, conveniently greater than 90°, to a second position in which it is disposed horizontally in the position previously occupied by the seat.

The seat described, although widely used, has several disadvantages. In fact, enlargement of the baggage compartment in the manner described above does not permit the load to be concealed from the outside, should that be desired. Moreover, the passengers are not protected, in the case of accidents, from the load projecting from the seat when this is in the said second position.

In a different kind of seats, for example disclosed in the above-mentioned FR-A-1 586 887, the seat squab is pivotable with respect to the vehicle floor and is further hinged to the seat back: these seats are not easily operable (basically for the reason that the seat configuration is changed by a combined and simultaneous rotation of both the seat squab and the seat back and for this purpose the upper portion of the seat back is completely detachable from the vehicle): moreover, limited relative movement of the seat squab and the seat back are allowed and the enlargement of the baggage compartment is limited to the rotation of the seat squab.
The object of the present invention is that of providing a rear seat for a vehicle, which will be free from the above specified disadvantages.
The said object is achieved by the present invention as claimed in claim 1.

In this way, by displacing the seat to the said second position the baggage space of the vehicle is delimited at the front by the seat squab, rearwardly by a vehicle door, laterally by the vehicle sides, below by the vehicle floor and above by the seat back and the parcel shelf. Therefore, a baggage compartment of this type makes it possible to conceal the load from the outside and to protect the passengers from the load itself in the case of accidents.

For a better understanding of the present invention a preferred embodiment thereof will hereinafter be described purely by way of non-limitative example and with reference to the attached drawings, in which;
Figure 1 schematically illustrates, in perspective, a preferred embodiment of a rear seat for a vehicle, according to the present invention and in a first normal position; and
Figure 2 is a schematic perspective view of the seat of Figure 1 in a second operative position.

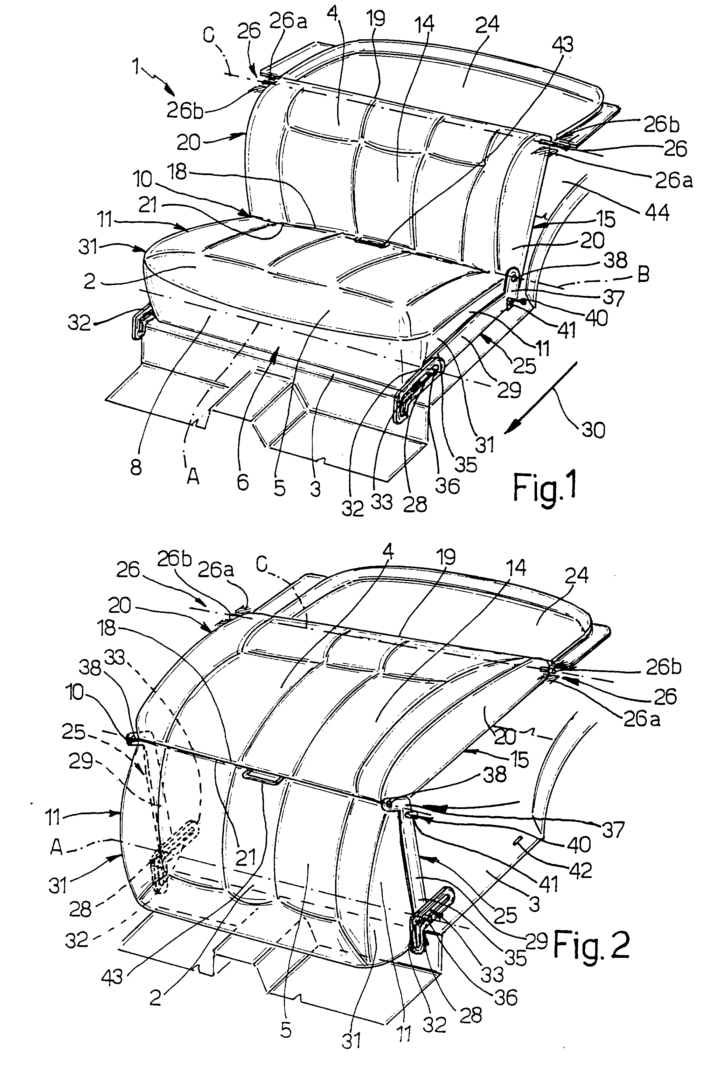

In Figures 1 and 2 the reference numeral 1 generally indicates a rear seat for vehicles in general and for motor vehicles in particular.

With reference to Figure 1, the seat 1 is housed within a known vehicle, not illustrated for simplicity, in a first, normal position.

The seat 1 includes a seat squab 2 disposed on a floor 3 of the vehicle and a seat back 4 inclined with respect to this latter by a predetermined angle such as to allow a back to rest against it correctly in dependence on the form and dimensions of the interior of the vehicle, conveniently an angle greater than 90°.

The seat squab 2 is shaped substantially as a padded cushion and is defined by an upper face 5, a lower face 6 disposed on the floor 3, a forward edge 8 and a rear surface 10 and two lateral sides 11.

The seat back 4 is also shaped as a padded cushion and is defined by a forward surface 14 of arcuate form, a substantially flat rear face 15 facing towards the interior of a baggage compartment 44 of the vehicle, lower and upper edges 18, 19 connecting the surface 14 with the face 15, and two lateral sides 20. Moreover, the edge 18 of the seat back 4 is in contact with a rear edge 21 of the face 5 of the seat squab 2.

A parcel shelf 24 is disposed parallel to the seat squab 2 and adjacent to the edge 19 of the seat back 4 in such a way as to cover the baggage compartment 14 from above.

The seat 1 further includes first connection means 25 operable to connect the seat back 4 to the seat squab 2 in an articulated manner and to connect the seat squab 2 to the floor 3 of the vehicle, and second connection means 26 connecting the seat back 4 to the vehicle, defining a hinge disposed close to the upper edge 19 of the seat back 4 itself.

According to the invention the first connection means 25 are constituted by two mechanisms which are disposed on opposite sides of the seat 1 and are parallel with one another. The mechanisms 25 each comprise a first element 28 fixed to the floor 3 of the vehicle and a second element 29 fixedly connected to the seat squab 2, to the seat back 4 and to the first element 28 in such a way as to be able to turn and translate by a predetermined amount in a substantially longitudinal direction, indicated 30 in Figure 1, with respect to the vehicle.

The elements 28 each lie adjacent a forward portion 31 of an associated side 11 of the seat squab 2 and are parallel. Moreover, the elements 28 are each constituted by an L-shape bracket 32 defining a slot 33, which is also L-shape, and disposed on a plane parallel to the associated side 11 of the seat squab 2.

The elements 29 are each fixedly connected to a respective side 20 of the seat squab 4 and are parallel with one another. Each of these is constituted by an L-shape plate which has a first end 35 carrying a pin 36 the axis A of which is perpendicular to the plane of the slot 33 and inserted in this latter with clearance and orientated substantially in the direction 30, and a second end 37 carrying a pin 38 the axis of which is parallel to the axis A of the pin 36 and which can connect the seat squab 2 to the seat back 4 in a rotatable manner.

The second connection means 26 are constituted by two hinges disposed on opposite sides of the seat 1 and aligned along a hinge axis C parallel to the axis B of the pins 38. The hinges 26 each comprise a first half-element 26a fixed to the vehicle and a second half-element 26b carried by the seat back 4 and mounted rotatably in the first half-element 26a. In the specific example illustrated the first half-elements 26a are the seats formed on opposite sides of the vehicle and the second half-elements 26b are pins projecting upwardly from respective sides 20 of the seat back 4.

The seat 1 further includes known releasable connection means 40 operable to connect the seat 1 at its rear to the floor 3 of the vehicle and including at least one hook 41 rearwardly fixed to one of the elements 29 and at least one seat 24 for receiving the hook 41, formed laterally in the floor 3. Finally, a handle 43 is stitched to the seat 2 close to an intermediate region of its edge 21.

In use the seat 1 can be moved from the said first, normal position illustrated in Figure 1, to a second, operative position illustrated in Figure 2, in which the seat squab 2 is disposed vertically and the seat back 4 is disposed horizontally flush with the parcel shelf 24 and is adjacent, along its edge 18, to the edge 21 of the seat squab 2. The said second position can be reached simply by releasing the hook means 40 and pulling the handle 43 in the direction indicated by the arrow 30 in Figure 1. In this way the pins 36 of the elements 29 slide in the slots 33 of the elements 28 from a rear contact position with the brackets 32 to a forward contact position with the brackets 32 themselves, also carrying the seat squab 2 along with them.

At this point, continuing the pull the handle 48 in the same direction the pins 36, not being able to slide further in the slots 33 rotate about the axis A and cause the seat 2 to be tipped upwardly about the axis A itself from the first position in which it is disposed substantially horizontally to a second position in which it is disposed substantially vertically. Simultaneously, the mechanisms 25 guide the seat back 4 to turn upwardly about the axis C from the first position to the second position, in which it is disposed horizontally flush with the parcel shelf 24 maintaining it in contact along its edge 18 with the edge 21 of the seat squab 2.

In this way an increase in the capacity of the passenger compartment equal to the volume delimited by the floor 3, the seat back 4 in the second position and the seat squab 2 in the second position is obtained.

It is clear that the seat 1 can have modifications and variations introduced thereto which do not depart from the ambit of protection defined by the claims.

In particular, the seat 1 can be formed as two parts giving rise to two rear seats disposed alongside one another and having the same characteristics as the seat 1. In this way the seats obtained can be moved independently of one another allowing greater flexibility in the enlargement of the baggage compartment 44.

Moreover, it is possible to envisage means for adjusting the position of the pins 36 within the slots 33 in such a way that, by acting on these, the seat 2 can be translated forwardly or backwardly along the direction 30 to a plurality of different positions thus varying the adjustment of the seat back 4. This adjustment means could be constituted, for example, by a predetermined number of teeth integral with the inner surface of each of the brackets 32 and operable to fix the pins 36 within the slots 33 in a plurality of different positions, and by a corresponding number of seats 42 for each hook 41, aligned laterally along the floor 3 of the vehicle and operable to allow the seat 1 to be engaged to the floor 3 in different positions.

## Claims

1. A rear seat (1) for a vehicle, comprising a seat squab (2) and a seat back (4), the said seat (1) being able to assume a first, normal position in which the seat squab (2) rests on a floor (3) of the said vehicle, the seat back (4) forms a predetermined angle with the said seat squab (2) and has a lower edge (18) adjacent to a rear edge (21) of the seat squab (2) and an upper edge (19) adjacent to a parcel shelf (24) adapted to cover a baggage compartment (44) of the said vehicle, the said seat (1) further comprising first connection means (25) operable to connect at least one portion of the seat back (4) in an articulated manner to at least one corresponding portion of the seat squab (2) and this latter to the floor (3) of the vehicle, and second connection means (26) carried by the said seat back portion (4) close to the upper edge (19) of this latter, and defining a hinge having an axis of rotation (C) parallel to the said upper edge (19); the said first connection means (25) being operable to allow the said seat (1) to assume a second position in which the said portion of the seat squab (2) is tipped forward about its front edge (8) and the said portion of the seat back (4) is disposed parallel to the said parcel shelf (24) and substantially flush therewith in such a way that the said portion of the seat squab (2) and the said portion of the seat back (4) together delimit a covered space in communication with the said baggage compartment (44); the said seat (1) being **characterised in that** the said first connection means are constituted by at least two mechanisms (25) disposed on opposite lateral sides of the said seat squab (2) and seat back (4) portions and each comprising:
- a first element (28) fixable to the vehicle;
- a second element (29) fixedly connected to the said portion of the seat squab (2) and hingedly connected to the said portion of the seat back (4); and
- means (33, 36) for connecting in a rotary and sliding manner the said second element (29) to the said first element (28) in such a way that the said second element (29) is able to turn and translate through a predetermined amount in a substantially longitudinal direction (30) with respect to the said vehicle.

2. A seat according to Claim 1, characterised in that the said first elements (28) each lie adjacent a forward portion (31) of a respective side (11) of the said portion of the seat squab (2) and are fixable to a floor (3) of the said vehicle; each of the said first elements (28) being constituted by a bracket (32) defining a slot (33) and lying in a plane parallel to the associated side (11) of the said portion of the seat squab (2).

3. A seat according to Claim 2, characterised in that each of the said second elements (29) is constituted by a plate which is fixedly connected to a respective side (20) of the said portion of the seat back (4) and has a first end (35) carrying a first pin (36) fitted with clearance into the slots (33) of the said first element (28) and orientated in the said longitudinal direction (30), and a second end (37) carrying a second pin (38) operable rotatably to connect the said portion of the seat back (4) to the said portion of the seat squab (2).

4. A seat according to Claim 3, characterised in that the said second element (29) has an L-shape profile in a plane parallel to the respective sides (11) and (20) of the said seat squab portion (2) and the said seat back portion (4).

5. A seat according to any preceding Claim, characterised in that it includes releasable engagement means (40) fixedly connected to the said seat squab portion (2) and operable to fix the said seat (1) in the said first position.

6. A seat according to any preceding Claim, characterised in that the said second connection means are constituted by two hinges (26) aligned on opposite sides of the said of the seat back portion (4), each of the said hinges (26) including a first half-element (26a) fixed to a second half-element (26b) carried by the said seat back portion (4) and mounted rotatably in the said first half element (26b).

## Patentansprüche

1. Rücksitz (1) für ein Fahrzeug mit einem Sitzteil (2) und einer Sitzrücklehne (4), welcher Sitz (1) eine erste normale Position einnehmen kann, in der der Sitzteil (2) auf einem Boden (3) des Fahrzeuges aufliegt, wobei die Sitzrücklehne (4) einen bestimmten Winkel mit dem Sitzteil (2) einschließt und einen unteren Rand (18) neben einem hinteren Rand (21) des Sitzteils (2) und einen oberen Rand (19) neben einer Gepäckabdeckung (24) aufweist, die einen Kofferraum (4) des Fahrzeuges abdecken kann, welcher Sitz (1) weiterhin erste Verbindungseinrichtungen (25), die wenigstens einen Teil der Sitzrücklehne (4) in gelenkiger Weise mit wenigstens einem entsprechenden Teil des Sitzteils (2) und letzteren mit dem Boden (3) des Fahrzeuges verbinden können, und zweite Verbindungseinrichtungen (26) umfaßt, die vom Sitzrücklehnenteil (4) nahe am oberen Rand (19) des letzteren gehalten sind und ein Scharnier mit einer Drehachse (C) parallel zum oberen Rand (19) bilden, welche ersten Verbindungseinrichtungen (25) so bedienbar sind, daß der Sitz (1) eine zweite Position einnimmt, in der der Sitzteil (2) um seinen vorderen Rand (8) nach vorne gekippt ist, und die Sitzrücklehne (4) parallel zur Gepäckabdeckung (24) und im wesentlichen damit fluchtend angeordnet ist, derart, daß der Sitzteil (2) und die Sitzrücklehne (4) gemeinsam einen abgedeckten Raum in Verbindung mit dem Kofferraum (4) begrenzen, welcher Sitz (1) dadurch gekennzeichnet ist, daß die ersten Verbindungseinrichtungen aus wenigstens zwei Mechanismen (25) bestehen, die auf den gegenüberliegenden Seiten des Sitzteils (2) und der Sitzrücklehne (4) angeordnet sind und jeweils
- ein erstes Element (28), das am Fahrzeug befestigt werden kann,
- ein zweites Element (29), das fest mit dem Sitzteil (2) und gelenkig mit der Sitzrücklehne (4) verbunden ist, und
- Einrichtungen (33, 36) umfaßt, um drehbar und gleitend verschiebbar das zweite Element (29) mit dem ersten Element (28) so zu verbinden, daß das zweite Element (29) sich schwenken und in einem bestimmten Maß im wesentlichen in Längsrichtung (30) bezüglich des Fahrzeuges linear bewegen kann.

2. Sitz nach Anspruch 1, dadurch gekennzeichnet, daß die ersten Elemente (28) jeweils neben einem vorderen Teil (31) einer jeweiligen Seite (11) des Sitzteils (2) liegen und am Boden (3) des Fahrzeuges befestigt werden können, wobei jedes erste Element (28) aus einem Träger (32) besteht, der einen Schlitz (33) begrenzt und in einer Ebene parallel zur zugehörigen Seite (11) des Sitzteils (2) liegt.

3. Sitz nach Anspruch 2, dadurch gekennzeichnet, daß jedes zweite Element (29) aus einer Platte besteht, die fest mit einer jeweiligen Seite (20) des Rücklehnenteils (4) verbunden ist und ein erstes Ende (35), das einen Stift (36) trägt, der mit einem Spiel in die Schlitze (33) des ersten Elementes (28) gepaßt und in der besagten Längsrichtung (30) ausgerichtet ist, und ein zweites Ende (37) aufweist, das einen zweiten Stift (38) trägt, der drehbetätigbar ist, derart, daß er den Sitzrücklehnenteil (4) mit dem Sitzteil (2) verbindet.

4. Sitz nach Anspruch 3, dadurch gekennzeichnet, daß das zweite Element (29) ein L-förmiges Profil in einer Ebene parallel zu den jeweiligen Seiten (11) und (20) des Sitzteils (2) und des Sitzrücklehnenteils (4) hat.

5. Sitz nach einem der vorhergehenden Ansprüche, dadurch gekennzeichnet, daß er lösbare Eingriffseinrichtungen (40) aufweist, die fest mit dem Sitzteil (2) verbunden sind und den Sitz (1) in der ersten Position festlegen können.

6. Sitz nach einem der vorhergehenden Ansprüche, dadurch gekennzeichnet, daß die zweiten Verbindungseinrichtungen aus zwei Scharnieren (26) bestehen, die auf gegenüberliegenden Seiten des Sitzrücklehnenteils (4) in einer Linie zueinander ausgerichtet sind, wobei jedes Scharnier (26) ein erstes Halbelement (26a) aufweist, das an einem zweiten Halbelement (26b) angebracht ist, das vom Sitzrücklehnenteil (4) gehalten ist, und das drehbar im ersten Halbelement (26a) angebracht ist.

## Revendications

1. Siège arrière (1) pour un véhicule, comprenant un coussin de siège (2) et un dossier (4), le dit siège (1) pouvant prendre une première position normale dans laquelle le coussin de siège (2) repose sur un plancher (3) du dit véhicule et le dossier (4) forme un angle prédéterminé avec le dit coussin de siège (2) et il a un bord inférieur (18) adjacent à un bord arrière (21) du coussin de siège (2) et un bord supérieur (19) adjacent à une plage arrière (24) prévue pour couvrir un compartiment à bagages (44) du dit véhicule, le dit siège (1) comprenant en outre des premiers moyens de liaison (25) servant à connecter au moins une partie du dossier (4) d'une manière articulée à au moins une partie correspondante du coussin de siège (2) et ce dernier au plancher (3) du véhicule, et des deuxièmes moyens de liaison (26) portés par la dite partie de dossier (4) près du bord supérieur (19) de ce dernier et définissant une charnière ayant un axe de rotation (C) parallèle au dit bord supérieur (19); les dits premiers moyens de liaison (25) étant actionnables pour permettre au dit siège (1) de prendre une deuxième position dans laquelle la dite partie du dit coussin de siège (2) est basculée vers l'avant autour de son bord avant (8) et la dite partie du dossier (4) devient parallèle à la dite plage arrière (24) et sensiblement en affleurement avec celle-ci d'une manière telle que la dite partie du coussin de siège (2) et la dite partie du dossier (4) délimitent ensemble un espace couvert en communication avec le dit compartiment à bagages (44) ; le dit siège (1) étant caractérisé en ce que les dits premiers moyens de liaison sont constitués par au moins deux mécanismes (25) placés sur les côtés latéraux opposés des dites parties du coussin de siège (2) et du dossier (4), et comprenant chacun :
-un premier élément (28) qui peut être fixé au véhicule ;
-un deuxième élément (29) connecté de façon fixe à la dite partie du coussin de siège (2) et connecté de façon articulée à la dite partie du dossier (4) ; et
-des moyens (33, 36) pour connecter de façon tournante et coulissante le dit deuxième élément (29) au dit premier élément (28) d'une manière telle que le dit deuxième élément (29) peut pivoter et se translater d'une quantité prédéterminée dans une direction sensiblement longitudinale (30) par rapport au dit véhicule.

2. Siège selon la revendication 1, caractérisé en ce que les dits premiers éléments (28) sont tous deux adjacents à une partie avant (31) d'un côté respectif (11) de la dite partie du coussin de siège (2) et peuvent être fixés à un plancher (3) du dit véhicule, et chacun des dits premiers éléments (28) est constitué par un support (32) définissant une rainure (33) et situé dans un plan parallèle au côté associé (11) de la dite partie du coussin de siège (2).

3. Siège selon la revendication 2, caractérisé en ce que chacun des dits deuxièmes éléments (29) est constitué par une plaque qui est connectée de façon fixe à un côté respectif (20) de la dite partie du dossier (4), et qui a une première extrémité (35) portant une première broche (36) logée avec jeu dans les rainures (33) du dit premier élément (28) et orientée dans la dite direction longitudinale (30), et une deuxième extrémité (37) portant une deuxième broche (38) servant à connecter de façon pivotante la dite partie du dossier (4) à la dite partie du coussin de siège (2).

4. Siège selon la revendication 3, caractérisé en ce que le dit deuxième élément (29) a un profil en forme de L dans un plan parallèle aux côtés respectifs (11) et (20) de la dite partie de coussin de siège (2) et de la dite partie de dossier (4).

5. Siège selon une quelconque des revendications précédentes, caractérisé en ce qu'il comprend des moyens d'enclenchement libérables (40) connectés de façon fixe à la dite partie de coussin de siège (2) et manoeuvrables pour fixer le dit siège (1) dans la dite première position.

6. Siège selon une quelconque des revendications précédentes, caractérisé en ce que les dits deuxièmes moyens de liaison sont constitués par deux charnières (26) alignées sur les côtés opposés de la dite partie de dossier (4), chacune des dites charnières (26) incluant un premier demi-élément (26a) fixé à un deuxième demi-élément (26b) porté par la dite partie de dossier (4) et monté de façon tournante dans le dit premier demi-élément (26a).
